# EUROPEAN PATENT APPLICATION

(11) **EP 2 463 233 A1**
(43) Date of publication of application: **13.06.2012**
(21) Application number: 10196802.2
(22) Date of filing: 23.12.2010
(51) Int. Cl.: C01B 31/04, B01J 35/00, C01G 23/047

(54) **Graphene/nano-titanium dioxide composites and methods for preparing the same**

(30) Priority: 08.12.2010 TW 099142882
(71) Applicant: Taiwan Textile Research Institute, Tu-Chen City, Taipei Hsien, Taiwan (CN)
(72) Inventor: Lin, Yi-Jun, Taipei Hsien (TW); Tseng, Sheng-Mao, Taipei Hsien (TW); Lin, Jui-Chi, Taipei Hsien (TW); Lee, Shao-Yen, Taipei Hsien (TW)
(74) Representative: Becker Kurig Straus

(57) **Abstract**

Disclosed herein are methods for preparing graphene/nano-titanium dioxide composites. About 500 to 10,000 parts by weight of nano-titanium dioxide and about 1 part by weight of graphene are distributed in a water-ethanol (about 2:1 to 3:1 by volume) solution to obtain a dispersion. The nano-titanium dioxide and graphene within the dispersion are allowed to react under a pressure of about 10 to 15 MPa and a temperature of about 100 to 200°C thereby producing the graphene/nano-titanium dioxide composites.

## Description

### Field of Invention

The present invention relates to graphene/nano-titanium dioxide composites and methods for preparing the same.

### Description of Related Art

With the advancement of the technology, more and more organic pollutants (such as, chlorinated aromatic hydrocarbons, surfactant, dyes, herbicides, etc.) and inorganic pollutants (such as, CN⁻, CrO₄²⁻, etc.) are released into the environment. The continuous accumulation of these pollutants in the environment would pose a threat to ecology and human health.

Various methods have been devised to treat these pollutants. For example, the pollutants could be treated by adsorption, oxidation, reduction, filtration, and photocatalytic degradation. Among these methods, the photocatalytic degradation method has attracted research interests due to the advantages of easy-to-use, low-in-price, and high-in-stability.

Titanium dioxide is the mainstream product of the commercially available photocatalysts; however, the photocatalytic efficiency of such photocatalyst is not satisfactory. In view of the foregoing, there exists a need in the art for a novel photocatalyst exhibiting better rate of photocatalytic degradation.

### SUMMARY

The following presents a simplified summary of the disclosure in order to provide a basic understanding to the reader. This summary is not an extensive overview of the disclosure and it does not identify key/critical elements of the present invention or delineate the scope of the present invention. Its sole purpose is to present some concepts disclosed herein in a simplified form as a prelude to the more detailed description that is presented later.

In one aspect, the present invention is directed to methods for preparing graphene/nano-titanium dioxide composites. According to the principles and spirits of the present invention, graphene and nano-titanium dioxide are reacted at high-temperature and high-pressure conditions thereby producing graphene/nano-titanium dioxide composites.

According to one embodiment of the present invention, the method comprises steps as follow. About 500 to 10,000 part-by-weights of nano-titanium dioxide and about 1 part-by-weight of graphene are dispersed in a water/ethanol solution at a volume ratio of about 2:1 to 3:1 to obtain a dispersion. The dispersion is then subjected to a pressure of about 10-15 MPa and a temperature of about 100-200°C so that the nano-titanium dioxide and graphene within the dispersion are allowed to react thereby obtaining graphene/nano-titanium dioxide composites.

According to another embodiment of the present invention, the nano-titanium dioxide can be titanium dioxide nanotubes or titanium dioxide nanoparticles.

According to still another embodiment of the present invention, the titanium dioxide nanotubes are prepared by hydrothermal processing method.

In another aspect, the present invention is directed to graphene/nano-titanium dioxide composites. In contrast to the commercially available titanium dioxide catalyst, the present graphene/nano-titanium dioxide composites have relatively higher specific surface areas, thus a better rate of photocatalytic degradation.

According to one embodiment of the present invention, the present graphene/nano-titanium dioxide composites consist essentially of nano-titanium dioxide and graphene having a weight ratio of about 500:1 to 10,000:1.

Many of the attendant features will be more readily appreciated as the same becomes better understood by reference to the following detailed description considered in connection with the accompanying drawings.

### BRIEF DESCRIPTION OF THE DRAWINGS

The present description will be better understood from the following detailed description read in light of the accompanying drawings, wherein:
FIG. 1A to FIG. 1C are scanning electronic microscopic photos of the titanium dioxide nanotubes according to various working examples of the present invention;
FIG. 2A is a transmission electron microscopic photo of the graphene/titanium dioxide nanotubes composites according to one working example of the present invention;
FIG. 2B is an infrared spectroscopic diagram of the graphene/titanium dioxide nanotubes composites according to one working example of FIG. 2A; and
FIG. 3 is a diagram showing the result of the methyl blue test according to one working example of the present invention.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

As compared to micrometer-scale titanium dioxides, nano-titanium dioxides have higher specific surface areas. And thus, in theory, nano-titanium dioxides may provide greater area for photocatalysis, and thus exhibits better photocatalytic efficiency. However, particles of nano-titanium dioxides have rather high surface energy (i.e. high bonding potential) by nature, and thus, in practice, particles of nano-titanium dioxides are prone to aggregate in order to minimize the area of high surface energy surfaces. Besides, many photocatalytic degradation reactions are preferably carried out in aqueous solutions or in the presence of water. In this case, the particles of nano-titanium dioxides tend to form coagulations in water and/or air due to factors such as high-specific-surface-area and high-surface-energy. Either the formations of aggregations or coagulations would substantially decrease the specific surface area of the nano-titanium dioxide, thereby decreasing the photocatalytic efficiency of the nano-titanium dioxide.

In view of the foregoing, one aspect of the present invention is directed to methods for preparing a graphene/nano-titanium dioxide composite. According to the principles and spirits of the present invention, graphene and nano-titanium dioxide are reacted at high-temperature and high-pressure conditions thereby producing graphene/nano-titanium dioxide composites. Nano-titanium dioxides are dispersed across and fixed onto the surface of the graphene sheet by using the present method. As such, the possibilities of aggregation or coagulation of the particles of the nano-titanium dioxide would be effectively decreased. Also, the thus-obtained composite has a greater surface area (as compared to the original nano-titanium dioxides), and thus the ability of the composite material to absorbing the pollutants is increased. Moreover, the formation of the heterojunction between the nano-titanium dioxides and the graphene is operable to lower the combining rate of the electron and hole. Upon of the absorption of photons by the surface of the carbon materials, the electrons are injected into the conduction band of the titanium dioxide, thereby forming carriers for decomposing the pollutants.

According to one embodiment of the present invention, the method for preparing the graphene/nano-titanium dioxide composites at the high-temperature and high-pressure condition comprises the steps of preparing a dispersion of nano-titanium dioxides and graphenes and reacted at high pressure and temperature, as described in detailed hereinbelow.

In the step for preparing a dispersion of nano-titanium dioxides and graphenes, about 500 to 10,000 part-by-weights of nano-titanium dioxides and about 1 part-by-weight of graphenes are dispersed in a water/ethanol solution at a volume ratio of about 2:1 to 3:1.

According to embodiments of the present invention, the weight ratio of titanium dioxide to graphene is about 500:1 to 10,000:1; preferable 1,000:1 to 3,000:1. For example, when the amount of titanium dioxides is about 3 grams, the amount of graphenes is about 0.3 to 6 micrograms; specifically, the amount of the graphene as in the present example is about 0.3, 0.4, 0.5, 0.6, 0.7, 0.8, 0.9, 1, 1.5, 2, 2.5, 3, 3.5, 4, 4.5, 5, 5.5, or 6 micrograms.

According to the principles and spirits of the present invention, any nano-scale titanium dioxides could be used in the present invention. Illustrative examples of the nano-scale titanium dioxide include, but are not limited to: titanium dioxide nanotubes and titanium dioxide nanoparticles.

Generally, the specific surface area of commercially available titanium dioxide nanoparticles is about 50-60 m²/g. By contrast, the specific surface area of titanium dioxide nanotubes is about 200-400 m²/g.

In optional embodiments of the present invention, titanium dioxide nanotubes having higher specific surface area could be prepared by the hydrothermal processing method so as to further improve the photocatalytic efficacy of the final graphene/nano-titanium dioxide composites. According to the present invention, the hydrothermal processing method comprises the steps as follows.

First, suitable amount of titanium dioxide powder are grounded and added into concentrated sodium hydroxide aqueous solution to obtain a reacting solution. In the present case, the concentration of the sodium hydroxide aqueous solution is about 5 to 15 M, such as, about 5, 5.5, 6, 6.5, 7, 7.5, 8, 8.5, 9, 9.5, 10, 10.5, 11, 11.5, 12, 12.5, 13, 13.5, 14, 14.5, or 15 M. Moreover, the weight ratio of the titanium dioxide powder to the sodium hydroxide within the sodium hydroxide aqueous solution is about 1:1 to 1:3.

Then, the reacting solution is disposed in a high-pressure reactor, and the constituents within the reacting solution is allowed to react at a reaction pressure of about 10 MPa to 15 MPa and a reaction temperature of about 110 to 150°C. Generally, a retained time of about 4 to 24 hours is sufficient for substantially converting the titanium dioxide within the reacting solution into titanium dioxide nanotubes.

Our test results show that the reaction temperature and retained time would affect the tube diameter and length of the resultant nanotubes, thus, the specific surface area thereof. According to various embodiments of the present invention, suitable reaction temperature is about 110 to 150°C; preferably about 110 to 130°C. Specifically, the reaction temperature could be about 110, 115, 120, 125, 130, 135, 140, 145, or 150°C. Besides, suitable retained time is about 4 to 24 hours; preferable about 10 to 20 hours. Specifically, the retained time could be about 4, 5, 6, 7, 8, 9, 10, 11, 12, 13, 14, 15, 16, 17, 18, 19, 20, 21, 22, 23, or 24 hours.

Next, the resultant titanium dioxide nanotubes are cleaned by repeatedly washing with 0.1 M HCl and deionized water until the aqueous solution turns neutral. Afterwards, the cleaned titanium dioxide nanotubes are dried and further ground to obtain titanium dioxide nanotubes of the present embodiments. For example, the titanium dioxide nanotubes are dried in vacuum oven at about 40°C for about 6-12 hours to substantially remove the water content within the titanium dioxide nanotubes.

Our test results show that the specific surface area of titanium dioxide nanotubes prepared in accordance with the above-described method is about 200 to 500 m²/g.

According to the principles and spirits of the present invention, the graphenes suitable for the preparation of the dispersion may be acidified or otherwise modified chemically.

Graphene, also referred to as the mono layer graphite, is a two-dimensional planar sheet of carbon atoms. In natural conditions, however, the graphene sheets tend to stack together by van der Waals forces, and thus it is difficult to separate these graphene sheets. Accordingly, the solubility of the graphene in water or ethanol is generally unsatisfactory. As such, according to one embodiment of the present invention, the graphenes could be acidified before they are used to prepare the dispersion. In the acidifying step, the surfaces of at least a portion of the graphenes are partially oxidized thereby increasing its dispersibility in water. For example, in one embodiment, the graphene is acidified with about 0.5 to 5 M sulfuric acid for about 8 to 12 hours, under stir.

Besides, the graphenes have varieties of functional groups that may be subjected to chemical modifications. These chemically modified graphenes are also within the scope of embodiments of the present invention.

In the present embodiment, the solvent of the dispersion is water/ethanol solution at a volume ratio of about 2:1 to 3:1. For example, in various embodiments, the volume ratio of water to ethanol could be about 2:1, 2.5:1, or 3:1.

Moreover, any conventional techniques and/or devices could be used to facilitate the dispersion of the graphenes and titanium dioxides within the solvent. For example, in one embodiment, a ultrasonic bath is used to provide improve the uniformity of the distributions of the nano-titanium dioxides and graphenes within the solvent.

Next, in the compounding reaction, the dispersion is subjected to a reaction condition of about 10 to 15 MPa and about 100 to 200°C so that the nano-titanium dioxides and graphenes within the dispersions are allowed to react, whereby obtaining graphene/nano-titanium dioxide composites. Suitable pressure for the present compounding reaction is, for example, about 10, 11, 12, 13, 14, or 15 MPa; whereas suitable reaction temperature is about 100, 110, 120, 130, 140, 150, 160, 170, 180, 190, or 200°C.

The present compounding step could be carried out in a autoclave. Generally, the retained time for this reaction is depend on the amount of the reactant, and the desired level of compounding. According to embodiments of the present invention, the retained time for this stage is about 5 to 10 hours, which is sufficient for the graphenes and nano-titanium dioxides to form composites effectively. For example, the retained time is about 5, 6, 7, 8, 9, or 10 hours.

After the reaction, the as-produced graphene/nano-titanium dioxide composites could be washed with de-ionized water and filtered for several times and then the graphene/nano-titanium dioxide composites are dried. For example, the graphene/nano-titanium dioxide composites could be dried in a vacuum oven at 40°C.

In another aspect, the present invention is directed to graphene/nano-titanium dioxide composites. In contrast to the commercially available titanium dioxide catalyst, the present graphene/nano-titanium dioxide composites have relatively higher specific surface areas, thus a better rate of photocatalytic degradation.

According to one embodiment of the present invention, the present graphene/nano-titanium dioxide composites consist essentially of nano-titanium dioxide and graphene having a weight ratio of about 500:1 to 10,000:1; preferably about 1,000:1 to 3,000:1. Specifically, the weight ratio could be about 500:1, 600:1, 700:1, 800:1, 900:1, 1000:1, 2000:1, 3000:1, 4000:1, 5000:1, 6000:1, 7000:1, 8000:1, 9000:1, or 10000:1.

Besides, according to the principles and spirits of the present invention, illustrative examples of the nano-titanium dioxides include, but are not limited to: titanium dioxide nanotubes and titanium dioxide nanoparticles.

In optional embodiments, the nano-titanium dioxides could be titanium dioxide nanotubes having specific surface areas of about 200 to 500 m²/g, such as those prepared by the methods described hereinabove.

In optional embodiments, the surfaces of at least a portion of the graphenes are oxidized. In addition, or alternatively, in optional embodiments, the graphenes are chemically modified.

Various graphene/nano-titanium dioxide composites have been prepared in accordance with the methods described hereinabove, and series of experiments have been conducted to investigate the photocatalytic degradation efficiency and other properties of the present graphene/nano-titanium dioxide composites. Some of the experiments and results are summarized hereinbelow.

### Experiment I

In experiment I, titanium dioxide nanotubes were prepared in accordance with the hydrothermal processing method according to embodiments of the present invention with various reaction temperatures and retained times. Also, the morphologies and specific surface areas of these titanium dioxide nanotubes were investigated. The reaction temperature and retained time used in each working example, and the specific surface area of the as-produced titanium dioxide nanotubes are summarized in Table 1.

**Table 1**

| Working Example | Reaction Temperature (°C) | Retained Time (hours) | Specific Surface Area (m²/g) |
|---|---|---|---|
| 1-1 | 110 | 5 | 203.3 |
| 1-2 | 110 | 10 | 374.5 |
| 1-3 | 110 | 20 | 376.1 |
| 2-1 | 130 | 5 | 355.3 |
| 2-2 | 130 | 10 | 403.1 |
| 2-3 | 130 | 20 | 374.1 |
| 3-1 | 150 | 5 | 312.4 |
| 3-2 | 150 | 10 | 376.2 |
| 3-3 | 150 | 20 | 279.2 |

As can be seen in Table 1, when the retained time is the same, the specific surface areas of the resultant titanium dioxide nanotubes would first increase and then decrease as the reaction temperature increases. Besides, when the reaction temperature is the same, the specific surface areas the resultant titanium dioxide nanotubes would first increase and then decrease, as the retained time increases.

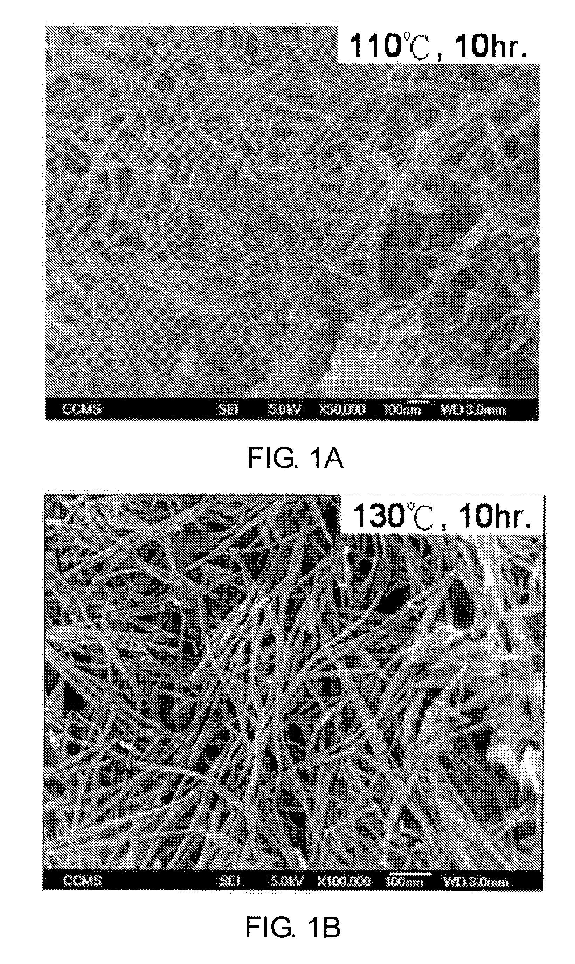

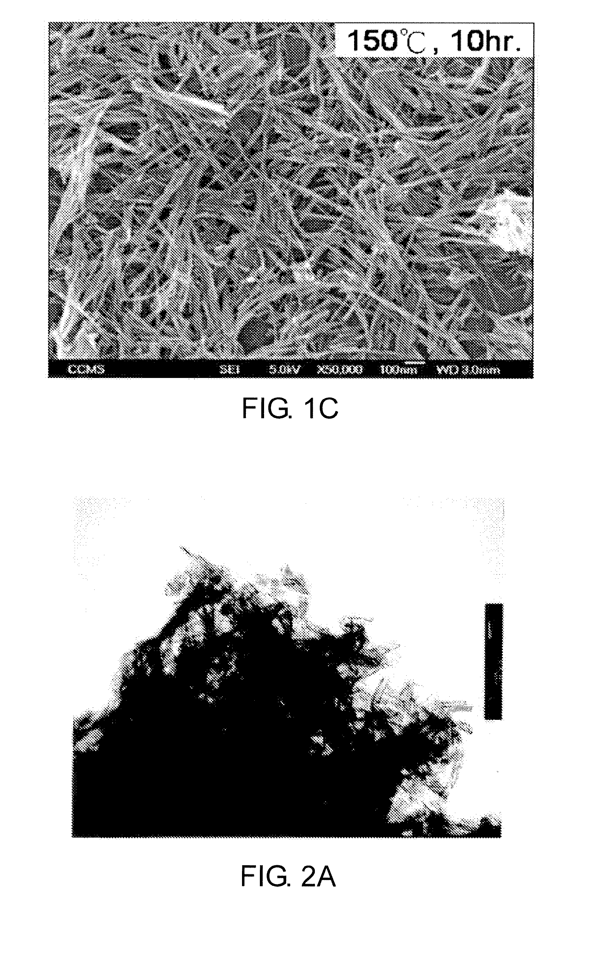

FIG. 1A to FIG. 1C are scanning electronic microscopic (SEM) photographs each showing the morphologies of the titanium dioxide nanotubes of the working example 1-2, 2-2 and 3-2. These SEM photos show that the titanium dioxides prepared in accordance with the methods provided herein have the appearance of nanotubes.

### Experiment II

In this experiment, the titanium dioxide nanotubes of the working example 1-2 were used to prepare the graphene/nano-titanium dioxide composites of working example 4 in accordance with the preparation method provided hereinabove.

More specifically, about 3 micrograms of graphenes were soaked in about 1 M sulfuric acid for about 10 hours, so that at least a portion of the surfaces of the graphenes were oxidized to obtain oxidized graphene. Then, about 3 grams of titanium dioxide nanotubes and said oxidized graphenes were added into a water/ethanol (volume ratio about 2.5:1) to obtain a dispersion. The dispersion then was subjected into an autoclave and the reaction was allowed to proceed at a pressure of about 12 MPa and a temperature of about 110°C for about 6 hours. After the compounding reaction, the products were rinsed with de-ionized water and filtered for several times, and the washed products were than dried in a vacuum oven at about 40°C.

FIG. 2A is a transmission electron microscopic (TEM) photograph showing the graphene/nano-titanium dioxide composites of the working example 4. As can be seen in FIG. 2A, there are many long, filamentous structures present in the graphene/nano-titanium dioxide composite. These filamentous structures are the nano-titanium dioxides. As such, the nano-titanium dioxides, after the compounding step, still exhibit the nanotube morphologies. Also, these titanium dioxide nanotubes are evenly distributed across the graphene layer.

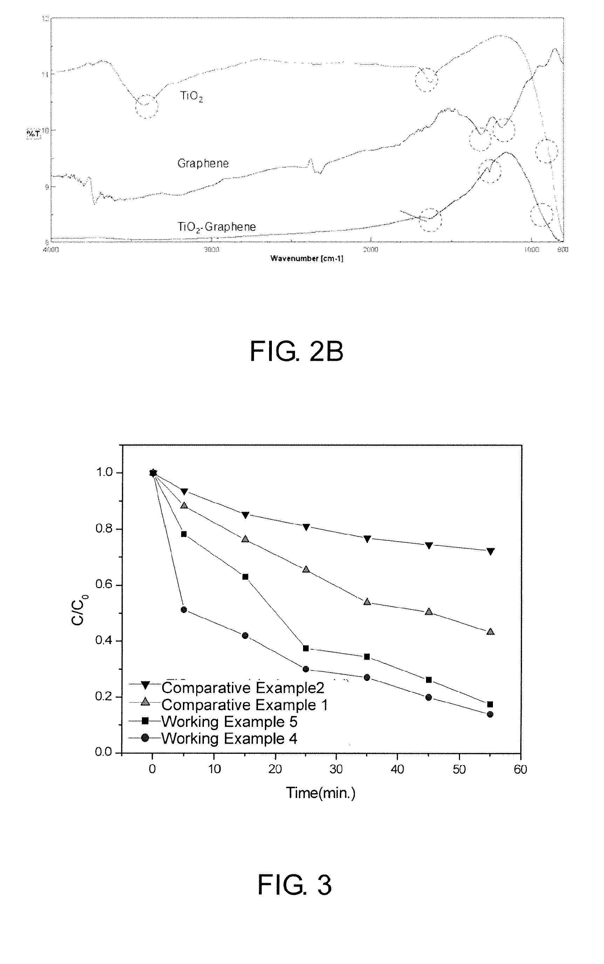

FIG. 2B shows the infrared spectroscopic (IR) diagrams exhibited by the graphene/nano-titanium dioxide composites of the working example 4, the titanium dioxides, and the graphenes. As can be seen in FIG. 2B, the graphene/nano-titanium dioxide composites of the working example 4 has a characteristic absorption peak at about 1620 nm. This characteristic absorption peak shows that a composite material was produced during the preparation process. As such, it is confirmed that graphenes and nano-titanium dioxides were compounded, rather than simply mixed, during the method provided herein.

### Experiment III

In this experiment, various graphene/nano-titanium dioxide composites were prepared in accordance with the method described hereinabove, and the photocatalytic degradation efficiencies of these materials were analyzed with the non-compounded nano-titanium dioxides as reference. Test results are summarized in Table 2 and FIG. 3.

**Table 2**

| | Morphology | C/C₀ after 55 minutes |
|---|---|---|
| Working Example 4 | Graphene/Titanium dioxide nanotube composites | 13.89% |
| Working Example 5 | Graphene/Titanium dioxide nanoparticle composites | 17.46% |
| Comparative Example 1 | Titanium dioxide nanotubes (from working example 1-2) | 43.25% |
| Comparative Example 2 | Commercial titanium dioxide nanoparticles | 72.40% |

In this experiment, the titanium dioxide nanotubes of the working example 1-2 were used in the comparative example 1, whereas the commercial DEGUSSA P-25 titanium dioxide nanoparticles were used in the comparative example 2. The graphene/nano-titanium dioxide composites prepared in the Experiment II hereinabove were used in working example 4. The graphene/titanium dioxide nanoparticle composites were prepared from the DEGUSSA P-25 titanium dioxide nanoparticles in accordance with the method in accordance with those steps set forth in Experiment II.

The methyl blue analysis was conducted to investigate the photocatalytic degradation efficiencies of these materials. Methyl blue is an organic stain that is soluble in water. An aqueous solution containing methyl blue may have a purple-blue appearance. Methyl blue may be absorbed onto surfaces of varieties substances and are not degraded by light easily. When a photocatalytic material in contact with the methyl blue solution is irradiated by light, the methyl blue would be decomposed into inorganic components thereby gradually decolorizing the aqueous solution. As such, methyl blue is frequently used as the reagent to analyze the efficiency of the photocatalytic degradation.

In the present experiment, about 0.01 gram of commercial methyl blue was dissolved in about 1 liter of de-ionized water to obtain a methyl blue aqueous solution having a molar ratio of about 2.7×10⁻⁵ M. Then, the photocatalytic materials were added into the methyl blue aqueous solution and ultrasonicated. The present photocatalytic analysis used about 10 micrograms/L methyl blue as the target to be degraded, and an ultraviolet/visible (UV/VIS) light source was used to measure the absorption spectrum of the methyl blue. The test result showed that there were four significant absorption peaks at about 246 nm, 292 nm, 610 nm, and 665 nm, respectively, wherein the maximum absorption peak occurred at about 665 nm. As such, this wavelength was used to quantify the concentration of the methyl blue.

For the photocatalytic analysis, about 30 micrograms of graphene/titanium dioxide nanotube composites (or other materials to be tested) were added into a methyl blue aqueous solution (about 50 ml) and mixed well. The solution was then subjected into a glass beaker and irradiated with ultraviolet light (about 250 W) to determine the photocatalytic efficiency thereof. The concentration of the test sample was determined every ten minutes by measuring the absorption spectrum of the supernatant of the test sample.

As can be seen in Table 2 and FIG. 3, DEGUSSA P-25 titanium dioxide nanoparticles (comparative example 2) had the worst photolytic efficiency among the four tested materials, where in about 72.40% of the methyl blue are still present after 55 minutes. By contrast, the graphene/titanium dioxide nanoparticle composites (working example 5, which is prepared from the commercial DEGUSSA P-25 titanium dioxide nanoparticles in accordance with the method provided hereinabove) may decomposes about 82.54 percents (100% - 17.46% = 82.54%) of methyl blue, which is about three times of the commercial DEGUSSA P-25 titanium dioxide nanoparticles.

Besides, the titanium dioxide nanotubes of the comparative example 2, which is prepared in accordance with the embodiments of the present invention, may exhibit better photocatalytic efficiency, as compared to commercial DEGUSSA P-25 titanium dioxide nanoparticles. Specifically, about 56.75 percents of the methyl blue were decomposed within 55 minutes. Moreover, regarding the graphene/titanium dioxide nanotube composites of the working example 4 (which is prepared from the titanium dioxide nanotubes of the comparative example 2), about 86.11 percents of the methyl blue was decomposed within 55 minutes.

In view of the embodiments and working examples provided hereinabove, the present invention provides a method for preparing the graphene/nano-titanium dioxide composites. This method can be used to produce graphene/nano-titanium dioxide composites having desired specific surface areas thereby reducing or substantially avoiding the problems such as the aggregation or coagulation of the nano-scale titanium dioxide that are often encountered by the conventional arts. Furthermore, the present method does not require complicated process steps or apparatus, and thus can be easily used in mass production.

Moreover, embodiments of the present provide methods for preparing titanium dioxide nanotubes. By the present methods, titanium dioxide nanotubes having desired specific surface areas could be obtained in a cost-and time-effective way. Also, it is possible to further increase the specific surface areas of the graphene/nano-titanium dioxide composites by using these titanium dioxide nanotubes.

Moreover, the test results show that the graphene/nano-titanium dioxide composites according to embodiments of the present invention exhibit more satisfactory photocatalytic degradation efficiency. The present composite material is an inorganic-organic composite material that may posses the advantages of both the inorganic and organic materials. For example, the inorganic material is known to be stable whereas the organic material may be subjected to chemical modification easily. These advantages substantially improve the processability and applicability of the present composite material.

It will be understood that the above description of embodiments is given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

## Claims

1. A method for preparing graphene/nano-titanium dioxide composites, the method comprises the steps of:
dispersing about 500 to 10,000 part-by-weights of nano-titanium dioxides and about 1 part-by-weight of graphenes in a water/ethanol solution at a volume ratio of about 2:1 to 3:1; and
allowing the nano-titanium dioxides and graphenes within the dispersion to react at a pressure of about 10 to 15 MPa and a temperature of about 100 to 200°C thereby obtaining the graphene/nano-titanium dioxide composites.

2. The method of claim 1, wherein the nano-titanium dioxides are titanium dioxide nanotubes or titanium dioxide nanoparticles.

3. The method of claims 1 or 2, wherein the titanium dioxide nanotubes are prepared by a method comprising the steps of:
mixing titanium dioxide powders with about 5 to 15 M sodium hydroxide aqueous solution to obtain a reaction solution, wherein the weight ratio of the titanium dioxide powders to the sodium hydroxide within the sodium hydroxide aqueous solution is about 1:1 to 1:3; and
allowing a reaction to take place under a pressure of about 10 to 15 MPa and a reaction temperature of about 110 to 150°C, whereby obtaining the titanium dioxide nanotubes.

4. The method of claims 1, 2 or 3, wherein the titanium dioxide nanotubes have a specific surface area of about 200 to 500 m²/g.

5. The method of any of the claims 1 to 4, wherein the titanium dioxide nanotubes are prepared in accordance with the method of claim 3.

6. The method of any of the claims 1 to 5, wherein the surfaces of at least a portion of the graphenes are oxidized.

7. The method of any of the claims 1 to 6, wherein the graphenes are oxidized by acidifying the graphenes with about 0.5 to 5 M sulfuric acid for about 10 to 12 hours.

8. The method of any of the claims 1 to 7, wherein at least a portion of the graphenes are chemically modified.

9. Graphene/nano-titanium dioxide composites consisting essentially of about 500:1 to 10,000:1 of nano-titanium dioxides and graphenes.

10. The graphene/nano-titanium dioxide composite of claim 9, wherein the nano-titanium dioxides are titanium dioxide nanotubes.

11. The graphene/nano-titanium dioxide composite of method of claims 9 or 10, wherein the titanium dioxide nanotubes have a specific surface area of about 200 to 500 m²/g.

12. The graphene/nano-titanium dioxide composite of any of the claims 9 to 11, wherein the nano-titanium dioxides are titanium dioxide nanoparticles.

13. The graphene/nano-titanium dioxide composites of any of the claims 9 to 12, wherein the surfaces of at least a portion of the graphenes are oxidized.

14. The graphene/nano-titanium dioxide composites of any of the claims 9 to 13, wherein the graphene/nano-titanium dioxide composites are prepared in accordance with the method of claim 1.

15. Graphene/nano-titanium dioxide composites consisting essentially of about 1,000: 1 of nano-titanium dioxides and graphenes, wherein the surfaces of at least a portion of the graphenes are oxidized.
